# EUROPÄISCHE PATENTSCHRIFT

(11) **EP 0 879 111 B1**
(45) Veröffentlichungstag und Bekanntmachung des Hinweises auf die Patenterteilung: **22.11.2000**
(21) Anmeldenummer: 97908125.4
(22) Anmeldetag: 21.01.1997
(51) Int. Cl.: B23C 5/22

(54) **SCHNEIDEINSATZ ZUM SCHRUPPEN UND SCHLICHTEN**
CUTTER INSERT FOR ROUGHING AND FINISHING
PLAQUETTE DE COUPE POUR DEGROSSISSAGE ET FINISSAGE

(30) Priorität: 31.01.1996 DE 19603391
(43) Veröffentlichungstag der Anmeldung: 25.11.1998
(73) Patentinhaber: Widia GmbH, 45145 Essen (DE)
(72) Erfinder: ROTHBALLER, Gerhard, D-91611 Lehrberg (DE)
(74) Vertreter: Vomberg, Friedhelm, Dipl.-Phys.
(86) Internationale Anmeldenummer: DE9700147
(87) Internationale Veröffentlichungsnummer: WO9727967

(56) Entgegenhaltungen:
- EP-A- 0 334 129
- DE-A- 4 013 717
- DE-A- 4 137 230
- FR-A- 2 364 724
- US-A- 3 805 349
- US-A- 4 699 549

## Beschreibung

Die Erfindung betrifft einen Schneideinsatz zur spanabhebenden Werkstückbearbeitung mit mindestens einer Hauptschneide zum Schruppen und einer hieran sich anschließenden Nebenschneide zum Schlichten.

Die EP 0 117 400 A1 beschreibt eine neuneckige Wendeschneidplatte, die auf der Unter- und Oberseite mehrere ungleich lange Haupt- und Nebenschneiden aufweist und die Form eines gleichzeitigen Dreieckes mit symmetrisch abgewinkelten Spitzen hat, wobei die Hauptschneiden im Bereich der abgewinkelten Spitzen liegen und kürzer als die Nebenschneiden sind. Um eine große Anzahl nutzbarer Schneiden bei geringem Schneideinsatzvolumen zu schaffen, wird vorgeschlagen, das Verhältnis der Länge der Hauptschneiden zur Längen der Nebenschneiden zwischen 1:1,5 und 1:3 zu wählen und die Hauptschneiden über gerundete Ecken in die Nebenschneiden übergehen zu lassen, wobei der Radius der gerundeten Ecken etwa dem Radius des eingeschriebenen Kreises der Wendeschneidplatte entspricht. Jeder Hauptschneide ist eine Spanformnut zugeordnet, die in etwa parallel zur Hauptschneide verlaufen soll.

Die DE 40 13 717 A1 betrifft einen Fräskopf, der mehrere, an seiner Stirnfläche im Bereich seines äußeren Umfanges wirksame Schneidplatten gemäß dem Oberbegriff des Anspruchs 1 aufweist. Jede der Schneidplatten weist jeweils vier in der Grundform trapezförmige Stirnflächen auf, die paarweise wechselseitig zu den Seitenflächen geneigt angeordnet sind. Die von den Stirn- und Seitenflächen der Schneidplatten gemeinsam gebildeten langen Kanten sind zumindest an einem Kantenende mit einer Fase versehen, wobei die von benachbarten Stirnflächen der Schneidplatte im Bereich der Fasen gebildeten Körperkanten die Hauptschneide bilden. Die von den Stirn- und Seitenflächen der Schneidplatten gemeinsamen gebildeten kurzen Kanten sind konvex gekrümmt und bilden Schlichtschneiden. Die Ecken der Seitenflächen der Schneidplatten bilden ein Parallelogramm.

Die US 3 805 349 beschreibt einen Schneideinsatz mit sechs ebenen Seitenflächen, die ein unregelmäßiges Sechseck bilden, das aus drei kurzen Seitenflächen und drei langen Seitenflächen besteht. Die Kanten der langen Seitenflächen sind konvex gekrümmt.

Es ist Aufgabe der vorliegenden Erfindung, einen Schneideinsatz für das kombinierte Schruppen und Schlichten zu schaffen, mit dem hohe Oberflächengüten als Zerspanungsergebnis erreicht werden können. Insbesondere soll der Schneideinsatz zum Grauguß-Planfräsen sein.

Diese Aufgabe wird durch den Schneideinsatz nach Anspruch 1 gelöst.

Der erfindungsgemäß Schneideinsatz besitzt eine im wesentlichen regelmäßige Sechseckform mit je drei Hauptschneiden und drei Nebenschneiden, die die Spanfläche begrenzen. Die von einer ebenen Freifläche und einer Spanfläche über ihre gesamte Länge gebildete Nebenschneide ist konvex gewölbt. Hierdurch wird eine ballige Nebenschneidkante zu Schlichtschneiden geschaffen, die im Schlichtbetrieb bei Schnittiefen von beispielsweise 0,5 mm eine hohe Oberflächengüte schafft.

Weiterbildungen der Erfindung sind in den Unteransprüchen beschrieben.

So ist die Nebenschneide vorzugsweise unter einem Radius von 40 mm bis 50 mm gewölbt.

Nach einer weiteren Ausführungsform der Erfindung besitzt der Schneideinsatz eine an die Nebenschneide angrenzende, vorzugsweise im Querschnitt konkave Spanformnut, die somit auf der Spanfläche liegt und sich über die gesamte Länge der Nebenschneide parallel hierzu erstreckt. Durch diese Spanformnut, die sich unmittelbar an die Nebenschneide anschließt, ergeben sich im in den Werkzeugträger eingebauten Zustand positive bis neutrale Spanwinkel, sowohl in axialer als auch in radialer Richtung. Vorzugsweise liegt der Nebenschneidenspanwinkel zwischen 10° und 20°, weiterhin vorzugsweise bei 15°. Der Radius der Spanformnut kann zwischen 0,5 mm und 0,8 mm liegen.

Nach einer Weiterbildung der Erfindung erstreckt sich die Spanformnut bis in den Übergangsbereich von der Nebenschneide zu der Hauptschneide. Der Hauptschneidenspanwinkel wird nach einer besonderen Ausgestaltung der Erfindung positiv gewählt, vorzugsweise beträgt er bis zu 8°.

Nach einer weiteren Ausgestaltung der Erfindung besitzt der Schneideinsatz ein mittleres erhabenes Spanflächenplateau, das im Abstand zu der höchsten Schneidkantenerhebung bzw. der durch die höchsten Schneidkantenerhebungen gebildeten Ebene liegt. Hierdurch ergibt sich eine Gestaltungsform, bei der auf der Spanfläche im Abstand zu den Schneidkanten über jeweilige Anstiegsflanken die Grenzlinie des mittleren Spanflächenplateaus geschaffen wird. Das mittlere erhabene Spanflächenplateau hat insbesondere den Vorteil, daß der Schneideinsatz doppelseitig ausgebildet werden kann, da dann alternativ das obere oder das untere Spanflächenplateau als Anlagefläche auf den Plattensitz eines Werkzeughalters gelegt und dort festgespannt werden kann. Vorzugsweise besitzt der Schneideinsatz eine im wesentlichen regelmäßige Sechs-Eck-Form mit je drei Haupt- und je drei Nebenschneiden, die die Spanfläche begrenzen, sind erhabene Spanflächenplateaus auf gegenüberliegenden Seiten vorhanden, können insgesamt sechs Haupt- und sechs Nebenschneiden genutzt werden.

Um den entstehenden Span, der von der Hauptschneide erzeugt wird, wirksam abheben bzw. teilen zu können, ist nach einer weiteren Ausgestaltung der Erfindung etwa in Höhe der Hauptschneidenmittelsenkrechten im Abstand zur Hauptschneide ein erhabenes Spanformelement angeordnet, das insbesondere als nasenförmiger Vorsprung des mittleren erhabenen Spanflächenplateaus ausgebildet ist. Der nasenförmige Vorsprung kann eine in der Spanflächenplateauebene liegende, im wesentlichen dreieckige ebene Dachfläche aufweisen, wobei die Spitze der Dachfläche auf die Hauptschneide gerichtet ist und sich von den an die genannte Spitze angrenzenden Seitenlinien der Dachfläche Flanken bis auf die Spanfläche hinab erstrecken, vorzugsweise unter einem Flankenwinkel von 40 bis 50°.

Die zwischen der Hauptschneide und der Nebenschneide gebildete Schneidecke ist abgerundet und besteht aus mehreren unter einem stumpferen Winkel als 120° zueinander und zur jeweiligen angrenzenden Haupt- oder Nebenschneide bestehenden linearen Teilstücken, die nicht spitz, sondern unter Bildung einer Abrundung aneinandergrenzen. Die Schneideckenabrundung besitzt einen Radius, der vorzugsweise zwischen 0,3 mm und 0,9 mm liegt.

Gegenstand der vorliegenden Erfindung ist auch ein Werkzeug, das aus einem Werkzeughalter mit mindestens einer Ausnehmung zur Aufnahme eines Schneideinsatzes der vorbeschriebenen Art besteht. Das Werkzeug kann insbesondere ein Fräser sein. Der in der genannten Ausnehmung angeordnete Schneideinsatz hat eine Einbaulage unter einem effektiven axialen Nebenschneidenspanwinkel zwischen 5° und 10°, vorzugsweise 7° bis 10°. Der effektive radiale Hauptschneidenspanwinkel beträgt 0° bis 2°. Der radiale Nebenschneidenspanwinkel liegt zwischen -5° und -10°, vorzugsweise bei -7° bis -10°.

Um mit großen Schnittiefen arbeiten zu können, und gleichermaßen eine hohe Oberflächengüte beim Zerspanen zu erreichen, wird nach einer weiteren Ausgestaltung der Erfindung in Vorschubrichtung gesehen hintereinander ein Schneideinsatz oder mehrere Schneideinsätze ohne gekrümmte Nebenschneidkante, also eine nach dem Stand der Technik bekannte Mono-Schrupp-Schneidplatte für die Grobbearbeitung und ein zweiter Schneideinsatz entsprechend der erfindungsgemäßen Ausgestaltung für die Feinbearbeitung mit geringerer Schnittiefe angeordnet. Der erste Schneideinsatz dient dann im wesentlichen zum Schruppen, der zweite im wesentlichen zur Feinbearbeitung, dem Schlichten.

Ausführungsbeispiele der Erfindung sind in den Zeichnungen dargestellt. Es zeigen
- Fig. 1: eine perspektivische Darstellung eines als Wendeschneidplatte ausgebildeten Schneideinsatzes,
- Fig. 2: eine perspektivische Darstellung desselben Schneideinsatzes in einer angedeuteten Einbaulage,
- Fig. 3: eine weitere perspektivische Darstellung des Schneideinsatzes nach Fig. 1 und 2,
- Fig. 4: eine Schnittansicht nach I - I gemäß Fig. 3,
- Fig. 5: eine Schnittdarstellung nach Schnittlinie II - II in Fig. 2,
- Fig. 6: eine Schnittdarstellung nach Schnitt III - III in Fig. 2,
- Fig. 7: eine perspektivische Darstellung einer Wendeschneidplatte entsprechend Fig. 1 ohne Befestigungsbohrung,
- Fig. 8: eine Teildarstellung eines Werkzeughalters mit mehreren Wendeschneidplatten im eingebauten Zustand und
- Fig. 9: eine Explosionsdarstellung der Teile nach Fig. 8.

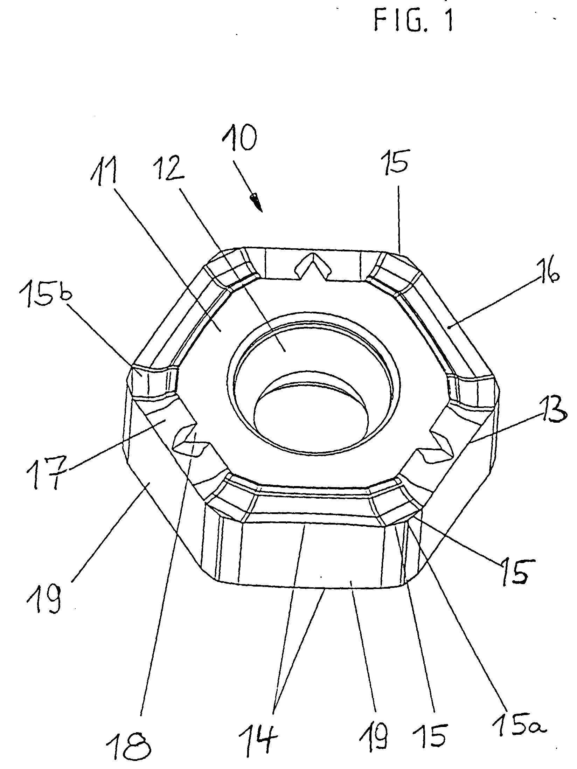

Der in Fig. 1 bis 6 dargestellte Schneideinsatz 10 besitzt eine im wesentlichen regelmäßige Sechs-Eck-Form mit einer oberen und einer unteren Spanfläche, die jeweils durch Schneidkanten (Haupt- und Nebenschneiden) begrenzt werden. Die Freiflächen sind unter einem 0°-Freiwinkel angeordnet, so daß der Schneideinsatz beiseitig verwendet werden kann. Im dargestellten Fall besitzt der Schneideinsatz 10 ein mittleres erhabenes Spanflächenplateau 11, das eine Ebene bildet, die im Abstand zu den Schneidkanten bzw. höchsten Schneidkantenerhebungen liegt, so daß die einem nicht dargestellten Werkzeugträgerschneideinsatz-Sitz in Einbaulage beabstandet sind und somit nicht beschädigt werden können. Im Zentrum des Schneideinsatzes ist eine Befestigungsbohrung 12 zum Durchführen einer Spannschraube vorgesehen. Der Schneideinsatz 10 besitzt auf jeder Spanflächenseite sechs Schneidkanten, wovon jeweils drei als Hauptschneiden 13 und die übrigen drei als Nebenschneiden 14 dienen. Jede Hauptschneide grenzt an eine Nebenschneide an und bildet mit dieser einen stumpfen Winkel von 120°. Der Übergangsbereich 15, 15a, d.h., die Ecke zwischen einer Hauptschneide 13 und einer Nebenschneide 14 kann vollständig abgerundet sein oder aus mehreren - hier insgesamt drei - Teilstücken bestehen, die wiederum unter einem größeren Winkel als 120° zueinander angeordnet sind und über eine Rundung ineinander übergehen. Die Eckenrundung ist im vorliegenden Fall mit 15a bezeichnet. Parallel zu jeder Nebenschneide 14 erstreckt sich über deren gesamte Länge eine Spanformnut 16, die eine konkav gekrümmte Form besitzt. Diese Spanformnut 16 reicht - wie durch 15b angedeutet ist - bis in den Übergangsbereich 15. Die sich entlang der Hauptschneide 13 erstreckenden Spanformnut 17 fällt hingegen im Anschluß an die Hauptschneide 13 im Querschnitt gesehen ab, bis zum tiefsten Punkt der Nut, die dort einen Krümmungsradius von 0,5 mm aufweist, von wo die Spanfläche in Richtung des Loches 12 gesehen über Flanken bis zum Spanflächenplateau 11 ansteigt.

Etwa in Höhe der Mittelsenkrechten einer jeden Hauptschneide 13 ist ein erhabenes Spanformelement 18 angeordnet, das als nasenförmiger Vorsprung des Spanflächenplateaus ausgebildet ist. Dieser Vorsprung besitzt eine ebene, im wesentliche gleichschenklig-dreieckige Dachfläche, wobei die Dreieckspitze zur Mitte der Hauptschneide 13 zeigt. Von den Dachflächengrenzlinien erstreckt sich bis zum Grund der Nut 17 eine jeweilige Anstiegsflanke 18a, etwa unter einem Winkel von 45°. Die Freiflächen sind jeweils mit 19 bezeichnet.

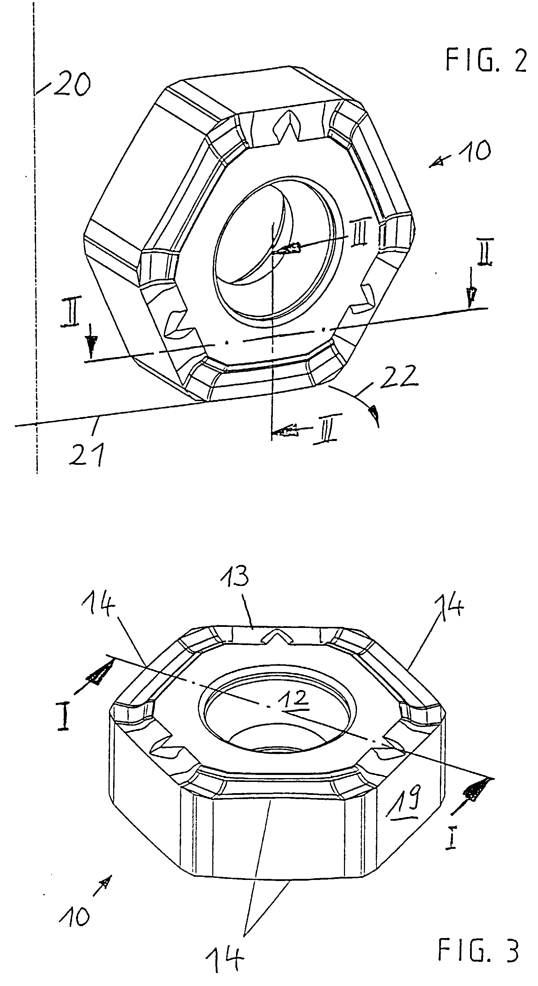

Fig. 2 zeigt den Schneideinsatz 10 (unter Fortlassung eines Werkzeugträgers) in Einbaulage. Die vertikale Achse 20 ist die Drehachse des als Fräser ausgebildeten Werkzeuges, mit 21 ist die Schnittebene am zu bearbeitenden Werkstück bezeichnet. Der Schneideinsatz 10 führt bei der Werkstückbearbeitung Drehungen aus, deren Richtung durch Pfeil 22 ersichtlich sind. Im vorliegenden Fall ist eine Einbaulage gewählt, bei der die Nebenschneide unter einem Winkel von -7° sowohl in axialer wie radialer Richtung, bezogen auf die Drehachse bzw. die Werkzeugträgerlängsachse, angeordnet ist.

Fig. 3 zeigt eine perspektivische Darstellung des Schneideinsatzes nach Fig. 1 unter einem anderen Betrachtungswinkel.

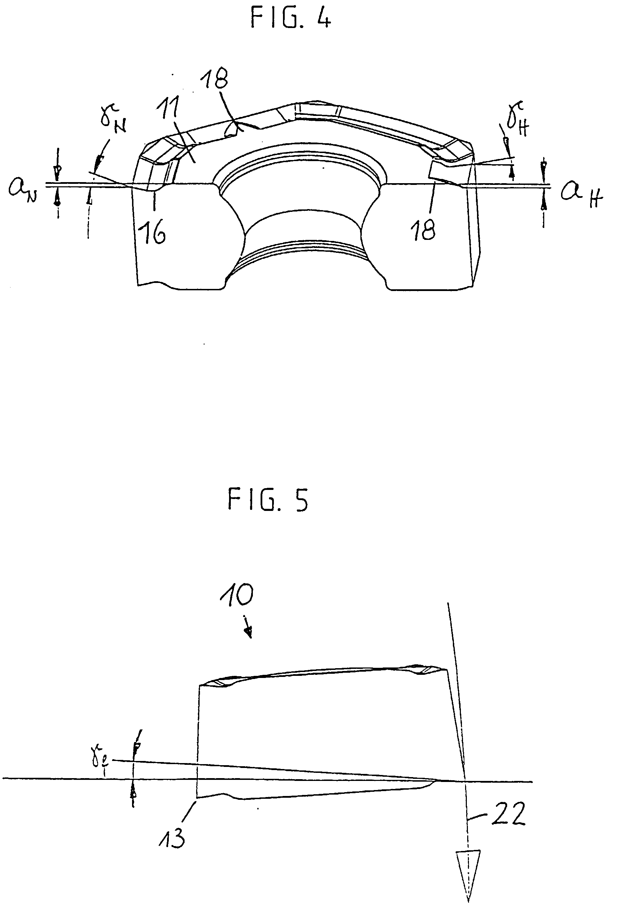

Wie der Schnittdarstellung nach Fig. 4 zu entnehmen ist, ist die Spanformmulde 16, die an die Nebenschneide 14 angrenzt, konkav ausgebildet, der Nebenschneidenspanwinkel γ_{N} beträgt 15°. Im an die Hauptschneide angrenzenden Teil fällt die Spanfläche unter Bildung eines Hauptschneidenspanwinkels γ_{H} von 8° ab. Das mittlere Spanflächenplateau 11 liegt um 0,03 mm höher als die Hauptschneide, was durch den Abstand a_{H} dargestellt ist, Entsprechendes gilt bezüglich des höchsten Punktes der konvex ausgestalteten Nebenschneide, was durch den Abstand a_{N} verdeutlicht wird. Der Krümmungsradius der Spanformnut 16 im Nutgrund beträgt 0,8 mm, der Krümmungsradius der Anstiegsflanke zum mittleren Plateau 11 0,5 mm.

Der Schnittdarstellung nach Fig. 5 kann der radiale Hauptschneidenspanwinkel γ_{f} des Schneideinsatzes in Einbaulage entnommen werden. Die bevorzugten radialen Hauptschneidenspanwinkel liegen zwischen 0° bis 4°.

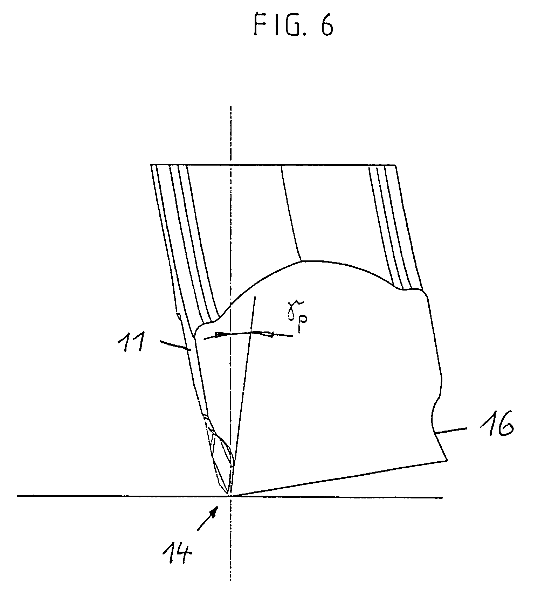

Wie in Fig. 6 dargestellt ist, beträgt der effektive axiale Nebenschneidenspanwinkel γₚ in Einbaulage 5°.

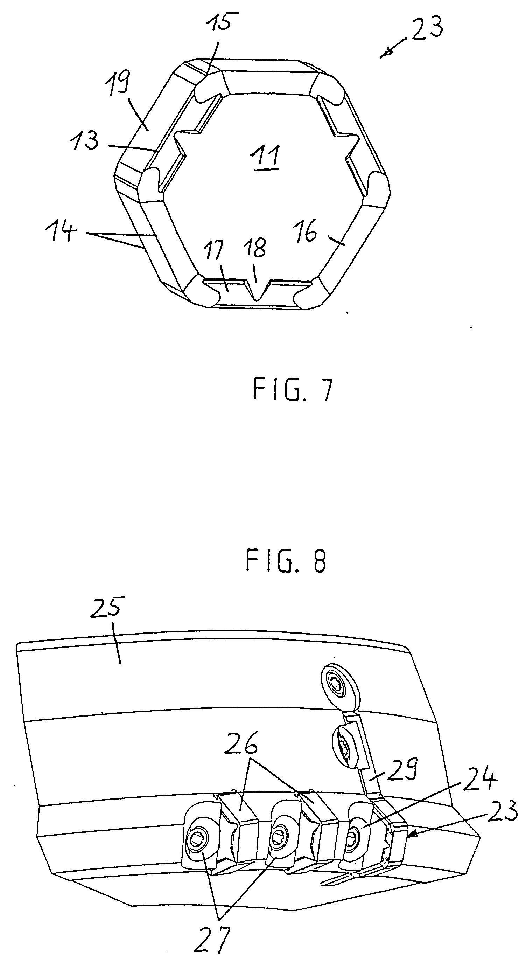

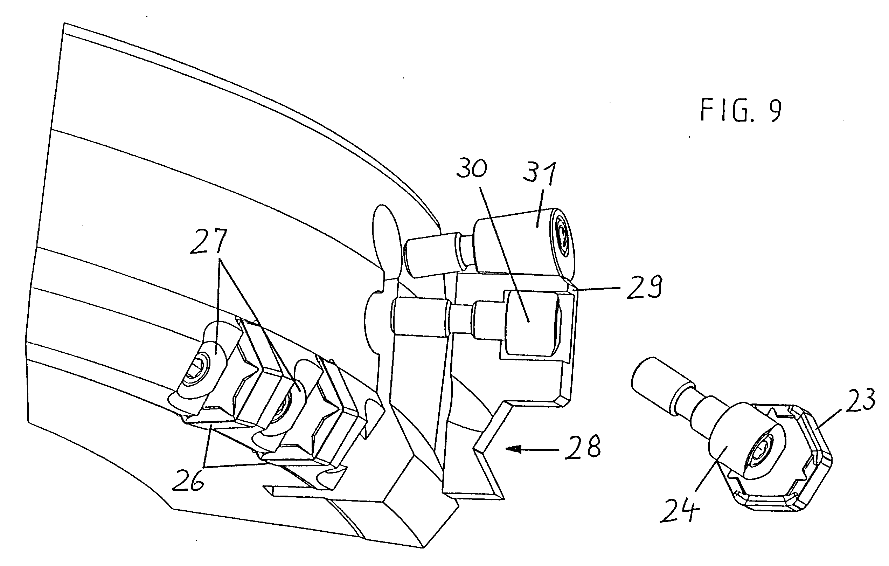

Die in Fig. 7 dargestellte Wendeschneidplatte 23 unterscheidet sich von der Wendeschneidplatte 10 nach Fig. 1 dadurch, daß kein mittleres Befestigungsloch 12 vorgesehen ist. Die Wendeschneidplatte 23 wird statt mit einer Befestigungsschraube mittels eines Klemmkeiles 24 eingespannt, wie dies Fig. 8 und 9 näher zu entnehmen ist.

Die Wendeschneidplatte 23 kann als Schlichtwerkzeug in einem Fräser verwendet werden. Wie in Fig. 8 und 9 dargestellt, besitzt der Fräserkörper 25 mehrere Aufnahmen für Schneidwerkzeuge, nämlich Schneideinsätze 26 zum Schruppen und den Schneideinsatz 23 zum Schlichten, wobei alle Schneidwerkzeuge mittels Klemmkeilen 24 und 27 befestigt sind.

Die erfindungsgemäße Wendeschneidplatte 23 wird zur Befestigung in dem Fräserkörper 25 in eine Ausnehmung 28 eines Anschlages 29 eingesetzt, der mittels eines Anschlagklemmkeiles 30 und eines Anschlagstellkeiles 31 ausrichtbar und fixierbar ist. Die Befestigung der Schlichtplatte 23 in axialer Richtung wird über den bereits erwähnten Klemmkeil 24 herbeigeführt.

## Patentansprüche

1. Schneideinsatz (10) zur spanabhebenden Werkstückbearbeitung mit mindestens einer Hauptschneide (13) zum Schruppen und einer hieran sich anschließenden Nebenschneide (14) zum Schlichten,
**gekennzeichnet,**
durch eine im wesentlichen regelmäßige Sechs-Eck-Form mit je drei Hauptschneiden (13) und drei Nebenschneiden (14), die die Spanfläche begrenzen, wobei die von einer ebenen Freifläche (19) und einer Spanfläche über ihre gesamte Länge gebildete Nebenschneide (14) konvex gewölbt ist.

2. Schneideinsatz nach Anspruch 1, dadurch gekennzeichnet, daß die Nebenschneide (14) unter einem Radius von 40 mm bis 50 mm gewölbt ist und/oder daß an die Nebenschneide (14) eine auf der Spanfläche (11) liegende und sich über die gesamte Länge der Nebenschneide (14) parallel hierzu erstreckende Spanformnut (16) angrenzt, vorzugsweise eine im Querschnitt konkave Spanformnut (16).

3. Schneideinsatz nach Anspruch 2, dadurch gekennzeichnet, daß der Nebenschneidenspanwinkel (γ_{N}) zwischen 10° und 20°, vorzugsweise bei 15° liegt und/oder daß der Radius der Spanformnut zwischen 0,5 mm und 0,8 mm liegt.

4. Schneideinsatz nach einem der Ansprüche 2 oder 3, dadurch gekennzeichnet, daß sich die Spanformnut (16) bis in den Übergangsbereich (15) von der Nebenschneide (14) zur Hauptschneide (13) erstreckt und/oder daß der Hauptschneidenspanwinkel (γ_{H}) positiv ist, vorzugsweise bis 8° beträgt.

5. Schneideinsatz nach einem der Ansprüche 1 bis 4, gekennzeichnet durch ein mittleres erhabenes Spanflächenplateau (11), das im Abstand zu der höchsten Schneidkantenerhebung (13, 14) liegt und/oder durch zwei parallel zueinander angeordnete Spanflächen (11).

6. Schneideinsatz nach einem der Ansprüche 1 bis 5, dadurch gekennzeichnet, daß etwa in Höhe der Hauptschneidenmittelsenkrechten im Abstand zur Hauptschneide (13) ein erhabenes Spanformelement (18) angeordnet ist, das vorzugsweise als nasenförmiger Vorsprung des mittleren erhabenen Spanflächenplateaus (11) ausgebildet ist, wobei weiterhin vorzugsweise der Vorsprung (18) eine in der Spanflächenplateauebene liegende, im wesentlichen dreieckige ebene Dachfläche aufweist, deren Spitze auf die Hauptschneide (13) gerichtet ist und von deren an diese Spitze angrenzenden Seitenlinien geneigte Flanken (18a) bis auf die Spanfläche hinabreichen, vorzugsweise unter einem Flankenwinkel 40° bis 50°.

7. Schneideinsatz nach einem der Ansprüche 1 bis 6, dadurch gekennzeichnet, daß die zwischen der Hauptschneide (13) und der Nebenschneide (14) gebildete Schneidecke (15) abgerundet ist und/oder aus mehreren unter einem stumpferen Winkel als 120° zueinander und zur jeweils angrenzenden Haupt- oder Nebenschneide bestehenden linearen Teilstücken (15a) gebildet wird.

8. Schneideinsatz nach Anspruch 7, dadurch gekennzeichnet, daß die Schneideckenabrundung (15) einen Radius zwischen 0,3 mm und 0,9 mm aufweist.

9. Werkzeug, bestehend aus einem Werkzeughalter mit mindestens einer Ausnehmung, in der ein Schneideinsatz (10) nach einem der Ansprüche 1 bis 8 angeordnet ist, insbesondere Fräser, dadurch gekennzeichnet, daß der Schneideinsatz (10) unter einem effektiven axialen Nebenschneidenspanwinkel (γₚ) von 5° angeordnet ist und der effektive radiale Hauptschneidenspanwinkel (γ_{f}) 0° bis 4° beträgt.

10. Werkzeug nach Anspruch 9, dadurch gekennzeichnet, daß der effektive radiale Nebenschneidenspanwinkel zwischen -5° und -10°, vorzugsweise bei -7°, liegt.

## Claims

1. Cutting insert (10) for machining workpieces with at least one main cutting edge (13) for roughing and an adjacent auxiliary cutting edge (14) for finishing,
**characterised**
by an essentially regular hexagonal shape with three main cutting edges (13) and three auxiliary cutting edges (14) that delimit the cutting surface, whereby the auxiliary cutting edge (14) that extends to a planer clearance face (19), is convex.

2. Cutting insert according to claim 1, characterised in that the auxiliary cutting edge (14) is arcuately curved at a radius between 40 mm and 50 mm and/or that a chip-shaping groove (16), preferably a concave-section ship-shaping groove (16), extends on the rake face (11) along the entire length of the auxiliary cutting edge (14) and parallel thereto.

3. Cutting insert according to claim 2, characterised in that the auxiliary-edge rake angle (γ_{N}) is between 10° and 20°, preferably 15° and/or that the radius of the chip-shaping groove is between 0,5 mm and 0,8 mm.

4. Cutting insert according to one of claims 2 or 3, characterised in that the chip-shaping groove (16) extends to the transition region (15) between the auxiliary cutting edge (14) and the main cutting edge (13) and/or that the main-edge rake angle (γ_{H}) is positive, preferably up to 8°.

5. Cutting insert according to one of claims 1 to 4, characterised by a central raised cutting-surface plateau (11) that is spaced from the highest point of the cutting edges (13, 14) and/or by two parallel rake faces (11).

6. Cutting insert according to one of the claims 1 to 5, characterised in that a raised chip-shaping element (18), preferably formed as a nose-shaped extension of the central raised cutting-surface plateau (11), is provided generally at the level of a perpendicular to a center of and spaced from the main cutting edge (13), whereby furthermore preferably the projection (18) has a generally triangular planar top face level with the plane of the cutting-surface plateau and having a triangulation point directed at the main cutting edge (13) and from which point extend adjacent planar side flanks (18a) to the rake face, preferably at a flank angle of 40° to 50°.

7. Cutting insert according to one of claims 1 to 6, characterised in that the cutting corner (15) between the main cutting edge (13) and the auxiliary cutting edge (14) is rounded and/or is formed of several linear parts (15a) extending at obtuse angles of 120° to each other and to the adjacent main or auxiliary cutting edge.

8. Cutting insert according to claim 7, characterised in that the cutting-corner rounding (15) has a radius between 0,3 mm and 0,9 mm.

9. Tool comprising a tool holder with at least one seat for holding a cutting insert (10) according to one of claims 1 to 13, in particular a miller, characterised in that the cutting insert (10) is set at an effective axial auxiliary rake angle (γₚ) of 5° and the effective radial main rake angle (γ_{f}) is between 0° and 4°.

10. Tool according to claim 9, characterised in that the effective radial auxiliary rake angle is between -5° and -10°, preferably -7°.

## Revendications

1. Insert de coupe (10) pour l'usinage d'une pièce par enlèvemet de copeaux, comprenant du moins un tranchant principal (13) destiné au dégrossissage et un tranchant secondaire (14) y adjacent destiné au finissage,
**caractérisé**
par une forme hexagonale pour l'essentiel régulière avec respectivement trois tranchants principaux (13) et trois tranchants secondaires (14) qui limitent la face de coupe, le tranchant secondaire (14) formé par une face de dépouille plane (19) et une face de coupe étant bombé de façon convexe sur l'ensemble de sa longueur.

2. Insert de coupe selon la revendication 1, caractérisé par le fait que le tranchant secondaire (14) est bombé à un rayon compris entre 40 mm et 50 mm, et/ou qu'une rainure (16) à former le copeau, de préférence une rainure à former le copeau (16) à section concave, qui est située sur la face de coupe (11) et s'étend sur l'ensemble de la longueur du tranchant secondaire (14) et parallèlement à cela, est contiguë au tranchant secondaire (14).

3. Insert de coupe selon la revendication 2, caractérisé par le fait que l'angle de coupe (γ_{N}) du tranchant secondaire présente une valeur comprise entre 10° et 20°, de préférence de 15°, et/ou que le rayon de la rainure à former le copeau est compris entre 0,5 mm et 0,8 mm.

4. Insert de coupe selon l'une des revendications 2 ou 3, caractérisé par le fait que la rainure à former le copeau (16) s'étend jusque dans la zone de transition (15) du tranchant secondaire (14) au tranchant principal (13), et/ou que l'angle de coupe (γ_{H}) du tranchant principal présente une valeur positive, de préférence une valeur allant jusqu'à 8°.

5. Insert de coupe selon l'une des revendications 1 à 4, caractérisé par un plateau central élevé de face de coupe (11) qui est situé à distance de l'élévation la plus haute (13, 14) du tranchant, et/ou par deux faces de coupe (11) disposées parallèlement l'une à l'autre.

6. Insert de coupe selon l'une des revendications 1 à 5, caractérisé par le fait qu'un élément élevé à former le copeau (18), qui est réalisé de préférence comme projection en forme de nez du plateau central élevé de face de coupe (11), est disposé à peu près à la hauteur de la perpendiculaire au centre du tranchant principal et à distance du tranchant principal (13), en outre de préférence, la projection (18) présentant une surface supérieure plane pour l'essentiel triangulaire, située dans le plan du plateau de face de coupe, dont la pointe est dirigée vers le tranchant principal (13) et à partir des lignes latérales de laquelle, qui sont contiguës à cette pointe, s'étendent des flancs inclinés (18a) jusqu'à la face de coupe, de préférence à un angle de flanc qui est compris entre 40° et 50°.

7. Insert de coupe selon l'une des revendications 1 à 6, caractérisé par le fait que le coin de coupe (15) qui est formé entre le tranchant principal (13) et le tranchant secondaire (14) est arrondi et/ou est formé de plusieurs parties linéaires (15a) qui sont disposées à un angle obtus de plus de 120° l'une à l'autre et au tranchant principal ou secondaire respectivement adjacent.

8. Insert de coupe selon la revendication 7, caractérisé par le fait que l'arrondi du coin de coupe (15) présente un rayon qui est compris entre 0,3 mm et 0,9 mm.

9. Outil se composant d'un porte-outil ayant un évidement du moins dans lequel est disposé un insert de coupe (10) selon l'une des revendications 1 à 8, en particulier fraise, caractérisé par le fait que l'insert de coupe (10) est disposé à un angle de coupe axial effectif (γₚ) du tranchant secondaire de 5° et que l'angle de coupe radial effectif (γ_{f}) du tranchant principal est compris entre 0° et 4°.

10. Outil selon la revendication 9, caractérisé par le fait que l'angle de coupe radial effectif du tranchant secondaire présente une valeur comprise entre-5° et -10°, de préférence de -7°.
